(19) Europäisches Patentamt / European Patent Office / Office européen des brevets

(11) **EP 2 199 874 A1**

(12) **DEMANDE DE BREVET EUROPEEN**

(43) Date de publication:
**23.06.2010 Bulletin 2010/25**

(51) Int Cl.:
***G03H 1/00*** *(2006.01)* ***G01N 21/47*** *(2006.01)*

(21) Numéro de dépôt: **09179610.2**

(22) Date de dépôt: **17.12.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **18.12.2008 FR 0858758**

(71) Demandeur: **Laboratoire Central des Points et Chaussees
75015 Paris (FR)**

(72) Inventeurs:
• **Taillade, Frédéric
92140 Clamart (FR)**
• **Belin, Etienne
49100 Angers (FR)**

(74) Mandataire: **Intes, Didier Gérard André et al
Cabinet Beau de Loménie
158, rue de l'Université
75340 Paris Cedex 07 (FR)**

(54) **Capteur et systeme d'imagerie holographiques pour la detection à distance d'un objet**

(57) Capteur (100, 200) pour la détection à distance d'un objet, comportant
- une source lumineuse (110), ayant une longueur de cohérence faible par rapport à la distance entre le capteur et l'objet ;
- un séparateur (112), divisant le faisceau lumineux émis en un faisceau incident (126) et un faisceau de référence (123) ;
- un cristal photoréfractif (114) enregistrant un hologramme à la réception interférante du faisceau de référence (123) et du faisceau réfléchi (127) par un objet (120) illuminé par le faisceau incident (126), et restituant l'hologramme dans un faisceau diffracté (124) réémis par le cristal par diffraction anisotrope sous l'effet du faisceau de référence (123),
- un détecteur (116), enregistrant une information à réception du faisceau diffracté (124) ;
- un filtre par polarisation (115), éliminant la plus grande partie du faisceau réfléchi transmis (128) par le cristal à réception du faisceau réfléchi; ainsi, le détecteur (116) ne reçoit du cristal que le faisceau diffracté (124). Ce capteur, et les systèmes d'imagerie intégrant ce capteur permettent la réalisation de mesures à travers des milieux diffusants.

FIG.2

EP 2 199 874 A1

## Description

L'invention concerne la mesure à distance de la position et/ou la forme d'objets, et notamment lorsque ceux-ci sont situés dans un milieu diffusant. Trois applications sont plus particulièrement envisagées :

- à grande échelle, la mesure de déplacement et/ou de distances de cibles coopératives ou non, en particulier dans des conditions météorologiques défavorables ;
- à moyenne échelle, pour un véhicule circulant sur une route, la détection et/ou l'identification à travers un brouillard ou la pluie, d'obstacles ou d'autres véhicules ;
- à petite échelle, la mesure de structures cellulaires dans des tissus biologiques.

Différentes solutions techniques sont connues pour la mesure à distance de la position d'un objet. Certaines sont partiellement exploitables pour la mesure en milieu diffusant.

Tout d'abord, à grande échelle, il est connu d'utiliser des théodolites pour la mesure de la position relative d'objets. Ces capteurs consistent à émettre un rayon laser infrarouge sur des cibles réfléchissantes et à mesurer le temps de parcours aller-retour de celui-ci. Par période de mauvais temps (pluie, neige, brouillard), le signal est interrompu.

D'autre part, des radars permettent de mesurer la position relative de cibles réfléchissantes par conditions météorologiques défavorables avec une bonne précision mais pour un coût élevé.

Dans le domaine de l'aide à la conduite, il est connu d'utiliser des capteurs actifs de type radar ou lidar, pour la détection d'obstacles ou de véhicules par exemple sur une route. Ces capteurs peuvent être au moins partiellement exploités par temps de brouillard ou de pluie. Le principe de base de ces capteurs consiste à émettre un signal électromagnétique en direction de la scène à caractériser et à analyser l'écho reçu en retour. Cependant, aucun de ces deux types de capteurs ne s'avère complètement satisfaisant :

- Les radars présentent en effet une faible résolution latérale, avec des champs angulaires très faibles, de quelques degrés seulement, ce qui les rend inexploitables pour détecter des véhicules circulant sur des routes larges ou dans le cas de routes sinueuses. De plus, les radars sont peu efficaces voire inefficaces pour détecter des obstacles fixes situés sur le bord ou même sur la enfin, face à un environnement complexe, les radars des échos multiples et l'interprétation des données reçues s'avère difficile.
- Les lidars sont une transposition des radars au domaine optique, l'émetteur hyper fréquence du radar étant remplacé typiquement par un laser. Un capteur lidar est constitué ainsi d'un émetteur, d'une optique de réception ainsi que d'un système électronique d'analyse des signaux reçus en retour. Il s'agit de capteurs dit "temps de vol". Le principal inconvénient des lidars est que leur performance se dégrade énormément lorsque les conditions météorologiques sont défavorables, par exemple lorsque l'on cherche à les mettre en oeuvre à travers du brouillard ou de la pluie. De plus, les lidars se montrent très sensibles à l'état de surface de l'objet mesuré ; et ainsi leur performance est très variable, ce qui pourrait rendre nécessaire, le cas échéant, d'équiper de rétroréflecteurs des véhicules à détecter sur une route.

D'autre part, dans le domaine de la mesure de structures cellulaires dans des tissus vivants, qui sont des milieux fortement diffusants, d'autres systèmes de mesure sont utilisés, ces systèmes étant seulement connus pour des mesures à de très petites échelles. La principale technique utilisée repose sur une technique classique d'interférométrie appelée tomographie par cohérence optique (OCT pour Optical cohérence Tomographie), utilisée notamment de manière connue pour réaliser des outils d'aide au diagnostic médical in vivo.

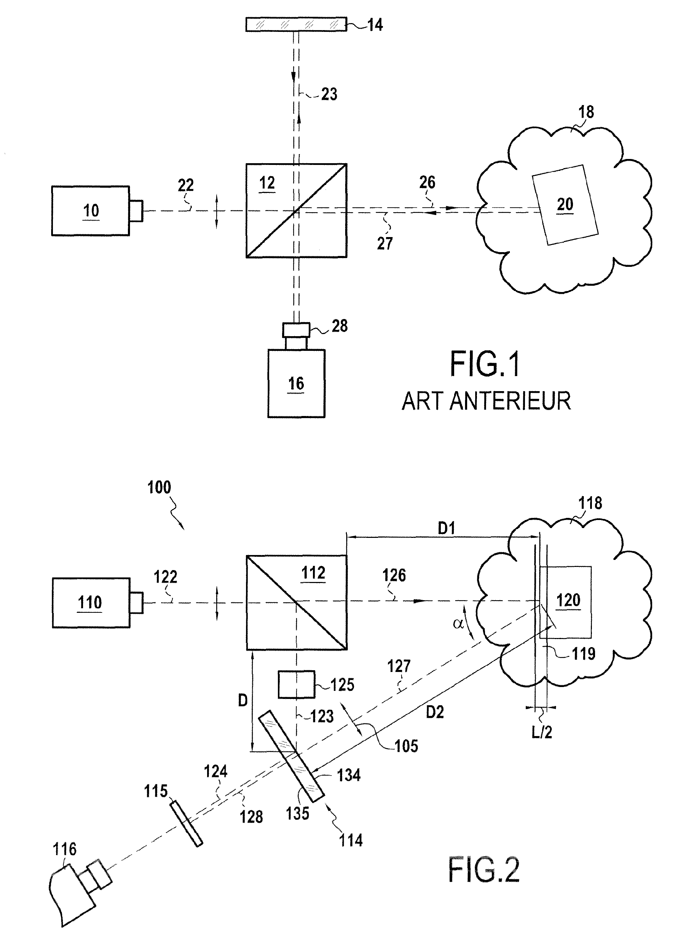

Le principe de la tomographie par cohérence optique est illustré par la figure 1. Cette figure présente un système d'imagerie comportant une source de lumière constituée par une source laser 10 ; un cube séparateur de faisceau 12, un miroir 14, et un détecteur 16 constitué en général par une caméra CCD. Ces différents éléments sont agencés pour former un interféromètre de type Michelson. Dans ce système d'imagerie, la source lumineuse 10 projette un faisceau de lumière 22 dit faisceau "source" en direction du tissu à mesurer 18. A l'intérieur de ce tissu, se trouvent des organites 20 dont on cherche à déterminer la position. Le cube séparateur est disposé sur le trajet du faisceau source 22. Il divise celui-ci en un faisceau de référence 23 qui est redirigé vers le miroir 14, et un faisceau incident 26 qui va frapper le tissu 18. Le miroir 14 est disposé perpendiculairement au faisceau de référence 23 ; aussi il renvoie celui-ci dans la direction de laquelle il provient, de telle sorte qu'une partie du faisceau de référence 23, après avoir frappé le miroir 14, retraverse le cube séparateur 12 et est alors dirigé vers l'objectif 28 de la caméra 16. L'autre partie du faisceau de référence 23, après avoir frappé le miroir retourné vers la source lumineuse 10.

Le faisceau incident 26, pour sa part, lorsqu'il atteint le tissu 18, est réfléchi par celui-ci et principalement par des organites 20 disposés dans celui-ci (un seul organite est représenté). Une partie du faisceau rétroréfléchi 27 est déviée à angle droit par le cube séparateur en direction de la caméra 16. L'autre partie du faisceau rétroréfléchi 27 retraverse le cube en direction de la source lumineuse 10. Ce montage permet donc de combiner une partie du faisceau 27 réfléchi par l'objet, en l'occurrence réfléchi par le tissu 18 que l'on cherche à mesurer, avec une partie du faisceau 23 ayant suivi un trajet de référence. La combinaison de ces deux faisceaux, faisceau de référence 23 et faisceau réfléchi 27, provoque des interférences, dès lors que la différence entre les longueurs de chemin optique de ces deux faisceaux (23 ; 26+27) est inférieure à la longueur de cohérence de la source lumineuse 10 utilisée.

Alors que de tels systèmes d'imagerie fournissent des résultats intéressants lorsqu'ils sont utilisés pour la mesure d'objets en milieu non diffusants, en revanche, leurs performances se dégradent très fortement lorsqu'il s'agit de mesurer des objets placés dans un milieu diffusant, par exemple des organites 20 incorporés dans un tissu vivant 18. Cela est du notamment au fait que dans le système d'imagerie présenté sur la figure 1, l'information utile ne constitue qu'une faible partie de l'information reçue par la caméra 16. Aussi, pour améliorer les performances métrologiques d'un tel système, l'information doit subir un traitement du signal important, en associant le plus souvent un dispositif électromécanique de déplacement du miroir 14 afin d'utiliser la technique de décalage de phase, nécessitant alors plusieurs prises d'information séquentielles pour chaque décalage de phase, toutes choses égales par ailleurs. Ces contraintes augmentent la complexité et le prix de tels systèmes, et de plus limitent leur utilisation à des observations statiques.

Compte tenu des inconvénients et limitations de ces différents systèmes, l'objectif de l'invention est de proposer un capteur relativement simple, comportant

- une source de lumière, apte à émettre un faisceau lumineux source ;
- un séparateur de faisceau, apte à recevoir le faisceau lumineux source et le diviser en un faisceau incident et un faisceau de référence, transmis respectivement dans deux directions distinctes ;
- un cristal photoréfractif apte à enregistrer un hologramme à la réception du faisceau de et d'un faisceau réfléchi par un objet illuminé par le faisceau incident, les deux faisceaux formant des interférences, et restituer l'hologramme dans un faisceau diffracté, émis lorsque le cristal est illuminé par le faisceau de référence, le cristal étant taillé et disposé dans le capteur de manière à permettre la diffraction anisotrope du faisceau de référence, entrainant l'émission du faisceau diffracté avec une polarisation perpendiculaire à celle du faisceau réfléchi transmis (128) par le cristal ;
- un détecteur, apte à fixer ou enregistrer une information à réception du faisceau diffracté ; et
- un filtre par polarisation, interposé entre le cristal et le détecteur, apte à éliminer du faisceau émis par le cristal en direction du détecteur, la plus grande partie du faisceau réfléchi transmis, transmis par le cristal à réception du faisceau réfléchi, de telle sorte que le détecteur ne reçoit principalement du cristal que le faisceau diffracté ;

le capteur étant apte à permettre la détermination à distance de la position et éventuellement de la forme d'objets, la mesure restant possible de préférence même à travers un milieu diffusant.

Cet objectif est atteint grâce au fait que la source lumineuse que comporte le capteur a une longueur de cohérence faible par rapport à la distance entre le capteur et l'objet.

Le filtre par polarisation est un filtre qui exploite une différence de polarisation pour réaliser une opération de filtrage de faisceau. Dans le capteur selon l'invention, le filtre élimine la plus grande partie du faisceau réfléchi transmis, sans affecter le faisceau diffracté. Ce dernier est émis, sensiblement inchangé, en direction du détecteur.

L'opération de filtrage est en fait réalisée par la combinaison du cristal photoréfractif et du filtre interposé entre le cristal et le détecteur. Elle permet d'éliminer ou du moins de séparer du signal utile, qui est le signal diffracté, le signal de bruit, en l'occurrence le faisceau réfléchi transmis, qui est la retransmission, la réémission par le cristal photoréfractif du signal réfléchi par l'objet (ce dernier faisceau comportant notamment des rayonnements diffusés par l'environnement diffusant entourant l'objet à mesurer ou situé entre le capteur et l'objet à mesurer). Grâce à ce filtrage, le capteur selon l'invention présente une dynamique de mesure très élevée, c'est-à-dire qu'il permet des acquisitions présentant un rapport signal sur bruit très élevé. C'est cette propriété qui permet son emploi sans avoir recours à un traitement du signal complexe, même pour des mesures réalisées à travers un milieu diffusant.

Naturellement, le fonctionnement du capteur nécessite la formation d'un hologramme dans le cristal photoréfractif, et donc la formation d'interférences entre le faisceau de référence et le faisceau réfléchi renvoyé par l'objet à mesurer.

Pour que ces interférences aient lieu, il faut que la différence de longueur entre d'une part, le chemin optique du faisceau de référence, et d'autre part, le chemin optique cumulé du faisceau incident et du faisceau réfléchi, soit inférieure à la longueur de cohérence de la source, de telle sorte que la rencontre des deux faisceaux génère des interférences.

En première approximation, à la longueur de cohérence de la source lumineuse près, cette condition, qui porte indirectement sur la distance entre le capteur et l'objet, définit la position du volume de mesure du capteur, seul volume dans lequel le capteur permet de détecter un objet et fournir une information relative à cet objet.

Du fait de cette condition, lorsque le séparateur de faisceau est proche du cristal photoréfractif, le volume de mesure est situé à une distance par rapport au capteur qui vaut environ la moitié de la longueur du chemin optique du faisceau de référence.

Dans certains modes de réalisation, la longueur parcourue par le faisceau de référence a une valeur fixe, liée à la structure du capteur. Dans ce cas, le volume de mesure est situé à une distance fixe par rapport au capteur (éventuellement grande), à laquelle la condition précédente est satisfaite.

Dans d'autres modes de réalisation au contraire, la longueur du chemin optique du faisceau de référence peut varier, par exemple en faisant circuler le faisceau de référence dans une ligne à retard optique constituée d'au moins deux miroirs, ou dans une fibre optique. La fibre optique peut être enroulée sur une bobine : Il est alors facile de moduler la longueur de la fibre optique, et donc du chemin optique du faisceau de référence. Le volume de mesure est situé à une distance du capteur sensiblement égale à la moitié de la longueur de la fibre optique.

D'autre part, un autre paramètre important du capteur est la longueur de cohérence de la source lumineuse. En effet, la profondeur du volume de mesure (dans le sens de propagation du faisceau incident) est voisine de la moitié de celle-ci - sans pouvoir excéder cette valeur -.

En effet, la longueur de cohérence de la source lumineuse joue le rôle suivant : l'hologramme ne peut être formé par le cristal photoréfractif, que s'il y a interférence entre le signal de référence et le signal réfléchi frappant celui-ci. Cette interférence ne peut avoir lieu que si les chemins optiques parcourus respectivement par ces deux faisceaux ne diffèrent pas d'une longueur supérieure à la longueur de cohérence de la source. Si cette longueur de cohérence est faible, le capteur ne détecte la position d'un objet mesuré que dans un volume de faible profondeur (dans le sens de propagation du faisceau incident) ; au contraire si la longueur de cohérence de la source lumineuse est grande, le capteur sera sensible à tout objet présent dans une tranche de grande profondeur.

Le capteur selon l'invention utilise cette propriété pour présenter un fort pouvoir séparateur, c'est-à-dire une capacité élevée de sélection des éléments à mesurer en fonction de leur position suivant la direction de mesure (direction du faisceau incident). Lorsque le capteur est utilisé pour des mesures de distance, cette capacité se traduit avantageusement par une précision importante, voire excellente.

Ainsi avantageusement, du fait que la source lumineuse présente une longueur de cohérence faible devant la distance séparant le capteur et l'objet, le volume de mesure contient tout ou partie de l'objet, mais inversement ne contient pas ou quasiment pas ce qui se trouve entre le capteur et l'objet. Une longueur de cohérence faible devant la distance entre le capteur et l'objet est défini ici comme une longueur inférieure à un cinquième de cette distance. De préférence, la longueur de cohérence de la source peut être inférieure à $\frac{1}{50}^{eme}$ de cette distance.

La structure du capteur permet que rien de ce qui se trouve hors du volume de mesure, entre le capteur et l'objet ne dégrade la qualité du signal obtenu par le détecteur du capteur. Grâce à cela, la réalisation de mesures reste possible même en milieu diffusant. La source lumineuse peut être une LED ou une lampe halogène, ces deux types de sources lumineuses présentant des longueurs de cohérence faibles.

Un autre avantage de ce capteur réside dans le fait qu'il est auto-aligné : Il ne nécessite pas un alignement précis du cristal photoréfractif par rapport à d'autres éléments du capteur, par exemple le séparateur de faisceau.

D'autre part, avantageusement le capteur est relativement simple, dans la mesure où il ne comporte qu'une source lumineuse, le faisceau de référence étant utilisé à la fois pour former l'hologramme dans le cristal photoréfractif et pour lire celui-ci. Il s'ensuit que le coût de fabrication du capteur reste relativement faible.

Dans un mode de réalisation, la source lumineuse et le détecteur sont aptes à fonctionner sensiblement continûment, de telle sorte que lorsque le capteur est en fonctionnement, la formation et la lecture de l'hologramme ont lieu simultanément et continûment. Ainsi avantageusement, le capteur permet une mesure en continu, à une fréquence qui dépend de la capacité du cristal photoréfractif à mettre à jour l'hologramme. Grâce à ce fonctionnement en continu, le capteur est relativement simple à mettre en oeuvre et à commander, et son coût de revient reste faible. Un exemple de détecteur fonctionnant 'sensiblement continûment' est une caméra CCD, qui produit des images successivement à une fréquence donnée, mais sans arrêt entre deux acquisitions.

Dans un mode de réalisation, le filtre comporte un polariseur, apte, dans le faisceau émis par le cristal en direction du détecteur, à éliminer la plus grande partie du faisceau réfléchi transmis. Le polariseur exploite la propriété d'anisotropie de diffraction du cristal photoréfractif, par laquelle le faisceau réfléchi transmis est polarisé perpendiculairement aux ondes diffractées. Il permet de manière très simple, peu coûteuse d'éliminer du faisceau transmis au détecteur les composantes lumineuses autres que celles constituant le faisceau diffracté.

Dans un mode de réalisation, le filtre comporte un cube séparateur de polarisation, apte, dans le faisceau émis par le cristal en direction du détecteur, à séparer du faisceau diffracté, la plus grande partie du faisceau réfléchi transmis, et à diriger celle-ci dans une direction autre que celle du détecteur. Le cube séparateur se substitue alors - en général - au polariseur pour filtrer le faisceau transmis au détecteur et éliminer de celui-ci les composantes non souhaitées. Le faisceau émis par le cristal et provenant du faisceau réfléchi par l'objet est détourné par le cube séparateur dans une deuxième direction (autre que celle du détecteur), dans laquelle éventuellement il peut être capté et analysé.

Dans un mode de réalisation, le faisceau réfléchi est reçu par le cristal en provenance directe de l'objet. L'agencement du capteur reste ainsi relativement simple.

Dans un mode de réalisation, le cristal est un cristal de la famille des sillénites, de type BiSiO, BiGeO, BiTiO, formules dans lesquelles Bi représente le bismuth, Si le silicium, Ge le germanium, Ti le titane, O l'oxygène.

Dans un mode de réalisation, la source lumineuse est cohérente, et est par exemple un laser. On comprend que de telles sources ne peuvent être utilisées que pour la mesure d'objets situés à grande distance, puisque par ailleurs selon l'invention, la longueur de cohérence reste faible devant la distance entre le capteur et l'objet. La longueur d'onde de la source utilisée est par exemple dans le vert, soit environ de 500 à 578 nm.

A l'extrême, la source lumineuse peut ainsi être choisie avec une longueur de cohérence élevée (dans l'absolu), si l'on veut réaliser un capteur dont le volume de mesure a une profondeur de champ importante, par exemple pour réaliser des observations dans le domaine spatial. Le capteur peut alors par exemple être simplement utilisé comme détecteur de présence.

Cependant à l'inverse, habituellement la source lumineuse est choisie avec une longueur de cohérence faible (dans l'absolu). Dans ce cas, le signal reçu par le capteur est non seulement purgé de toute information parasite provenant d'éléments interposés entre l'objet mesuré et le capteur, mais permet de plus de fournir une mesure de distance précise. Il est ainsi possible de réaliser un distancemètre.

Dans un mode de réalisation, le capteur comprend en outre un dispositif permettant l'application d'une tension électrique entre deux faces parallèles du cristal, perpendiculaires aux faces d'entrée et de sortie de celui-ci, de manière à augmenter l'efficacité de diffraction de celui-ci.

Dans un mode de réalisation, le détecteur comporte un support permettant de fixer ou enregistrer une image, et le capteur est ainsi un imageur. Par exemple, le détecteur comporte un support photosensible de type CMOS, CCD, ou une plaque argentique. Avantageusement, le capteur est ainsi un imageur ; il est donc apte à réaliser une mesure non plus ponctuelle, mais une mesure dans tout un angle solide en une seule acquisition. Ainsi, il est possible dans une seule mesure de détecter tous les corps situés à un certaine distance du capteur, dans l'angle solide considéré.

De préférence, le support photosensible est intégré dans un système permettant des acquisitions multiples, c'est-à-dire une caméra, ce qui permet d'enchainer, de multiplier les mesures.

Ce mode de réalisation permet de réaliser des systèmes de détection pour l'aide à la conduite de véhicule, aptes à détecter la présence d'obstacles dans l'espace situé devant le véhicule.

L'invention vise également à proposer un système d'imagerie 3D, apte notamment à fonctionner même lorsque le milieu environnant l'objet à mesurer est diffusant.

Cet objectif est atteint grâce au fait que le système d'imagerie comprend un imageur tel que défini précédemment, comportant en outre on système pour faire varier la longueur relative du chemin optique parcouru par le faisceau de référence par rapport au chemin optique cumulé du faisceau incident et du faisceau réfléchi. En effet, en l'absence d'un tel système, le capteur selon l'invention ne peut détecter ou mesurer un objet que s'il est à une certaine distance du capteur, cette distance caractérisant le volume de mesure du capteur. Cette limitation est levée dans un système d'imagerie comportant un système tel que précisé ci-dessus, dans lequel il est possible de faire varier les longueurs relatives du chemin optique parcouru par le faisceau de référence et du chemin optique parcouru par les faisceaux incidents et réfléchis

Ce système d'imagerie permet en effet de constituer un modèle 3D d'une scène, par exemple de la manière suivante :

- on fait varier pas-à-pas progressivement les longueurs relatives de chemins optiques précédemment citées ;
- à chaque pas du déplacement, on procède à une acquisition à l'aide du capteur ;
- on constitue un modèle 3D de la scène mesurée, en affectant à chaque image obtenue lors des différentes mesures réalisées, une information de profondeur, déduite de la position du capteur lors de l'acquisition de cette image.

Deux modes de réalisation principaux peuvent être envisagés pour faire varier la longueur relative du chemin optique parcouru par le faisceau de référence par rapport au chemin optique cumulé du faisceau incident et du faisceau réfléchi, et donc, pour faire varier la profondeur de champ du système d'imagerie :

Dans un mode de réalisation, le système pour faire varier la longueur relative du chemin optique est un système pour provoquer un déplacement relatif du capteur par rapport à l'objet mesuré. La mesure est réalisée alors soit par exemple en approchant progressivement le système d'imagerie de l'objet mesuré, en l'éloignant progressivement de ce dernier, ou encore en le déplaçant le long de celui-ci. Dans les deux cas, les positions du système d'imagerie par rapport à l'objet mesuré sont indexées et mesurées lors de chaque acquisition, de manière à permettre la mise en référence relative des différentes images obtenues lors des acquisitions successives. Le système d'imagerie peut comporter des moyens pour déterminer et enregistrer sa position relative par rapport à l'objet mesuré. Ces positions peuvent aussi être estimées en fonction de dru système. L'intérêt de ce mode dé réalisation est la simplicité du système pour faire varier la longueur du chemin optique utilisé.

Dans un mode de réalisation, le système pour faire varier la longueur relative du chemin optique est un système faisant varier la longueur du chemin optique parcouru par le faisceau de référence. Dans ce cas, sans avoir à déplacer le capteur par rapport à l'objet mesuré, il est ainsi possible de faire varier la profondeur de champ pour la mesure du système d'imagerie, et ainsi de procéder à des acquisitions successives fournissant des informations sur les différentes tranches de la scène correspondante aux profondeurs de champ successif.

Enfin, l'invention vise également à fournir un système pour la mesure à travers des tissus biologiques, ou un système pour la mesure à travers une atmosphère chargée en particules, par exemple des particules d'aérosol comme un brouillard, ou encore des gouttes de pluie.

Des systèmes permettant de telles mesures peuvent avantageusement être réalisés au moyen d'un capteur ou d'un système d'imagerie tel que défini précédemment.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :

la figure 1 représente un système de mesure tomographique par cohérence optique, déjà présenté ;
la figure 2 représente un capteur selon l'invention, dans laquelle le filtre est constitué par un polariseur ;
la figure 3 représente un capteur selon l'invention, dans laquelle le filtre est constitué par un cube séparateur de faisceau ;
la figure 4 représente un système d'imagerie selon l'invention permettant l'acquisition d'information en 3D sur un objet mesuré ;
la figure 5 représente une image obtenue par le système présenté sur la figure 4 pour une profondeur de mesure donnée.

Un capteur 100 selon l'invention est illustré par la figure 2.

Ce capteur 100 comporte une source de lumière 110, un cube séparateur de faisceau 112, un cristal photorétractif 114, un polariseur 115 et un détecteur 116.

La source lumineuse 110 est une source laser qui émet un faisceau source 122 en direction d'un objet à mesurer 120. Cette source lumineuse aurait pu être également, dans le cadre de l'invention, un laser, une diode laser, une diode électroluminescente, etc.

L'objet 120 est situé dans un milieu diffusant 118 qui peut être une atmosphère chargée de particules comme un brouillard ou l'atmosphère un jour de pluie, ou qui peut être encore un tissu vivant, ou autre (la mesure étant également possible, a fortiori, si le milieu 118 n'est pas diffusant). Le cube séparateur 112 est disposé sur le trajet du faisceau source 122 et divise celui-ci en deux faisceaux :

- un faisceau de référence 123 dévié de 90° par rapport à la direction du faisceau source 122 ;
- un faisceau incident 126 qui n'est pas dévié et continue son parcours jusqu'à atteindre l'objet à mesurer 120.

En traversant le milieu diffusant 118, et en frappant l'objet mesuré 120, le faisceau incident 126 engendre un faisceau réfléchi 127, qui est rétroréfléchi en direction du cristal photoréfractif 114. Le faisceau réfléchi 127 est capté par le cristal photoréfractif 114, via une optique de focalisation 105, directement après la réflexion sur l'objet mesuré 120, suivant une direction formant un angle $\alpha$ par rapport à la direction du faisceau incident.

D'autre part, le faisceau de référence 123, avant de frapper le cristal photoréfractif 114 vers lequel il est renvoyé par le cube séparateur 112, traverse un dispositif d'allongement de chemin optique 125. Ce dispositif sert à faire parcourir au faisceau de référence 123 une distance souhaitée, de telle sorte que le faisceau de référence d'une part, et le faisceau incident en combinaison avec le faisceau réfléchi d'autre part, parcourent des chemins optiques de longueur égale ou voisine avant d'atteindre le cristal photoréfractif 114. Cette condition est en effet nécessaire pour que la rencontre de ces deux faisceaux forme des interférences et engendre ainsi un hologramme dans le cristal photoréfractif 114.

Le dispositif d'allongement de chemin optique 125 peut être simplement constitué par une bobine de fibre optique enroulée, dans le cas où le faisceau de référence 123 est transmis par fibre optique ; la longueur de la fibre enroulée est alors choisie de telle sorte que la longueur du chemin optique parcouru par le faisceau de référence 123 soit égal à la somme des longueurs des chemins optiques des faisceaux incident 126 et réfléchi 127.

Comme cela a été dit, l'éclairage simultané du cristal photoréfractif 114 par le faisceau de référence 123 et le faisceau réfléchi 127 forme un hologramme à l'intérieur du cristal photoréfractif 114. Cet hologramme ne peut se former que si, compte tenu de la longueur de cohérence du faisceau source, le faisceau de référence forme des interférences avec le faisceau réfléchi retourné par l'objet. Par conséquent, l'hologramme n'est formé que pour des réflexions formées sur les parties de l'objet situées dans un volume de mesure 119 en forme de tranche, situé à une profondeur de champ bien déterminée par rapport au capteur 100. Ce volume de mesure est celui pour lequel la somme des longueurs des chemins optiques du faisceau réfléchi et du faisceau incident correspond sensiblement à la longueur du chemin optique du faisceau de référence.

Plus précisément, si le faisceau incident 126 parcourt une distance D1 entre le cube séparateur 112 et l'objet à mesurer 120 ; si le faisceau réfléchi 127 parcourt une distance D2 entre l'objet 120 et le cristal photoréfractif 114, alors, le faisceau réfléchi ne sera enregistré dans l'hologramme que si l'inéquation suivante est respectée :

$$\mid D1 + D2 - D \mid \; < L \; ;$$

inéquation dans laquelle

| x | désigne la valeur absolue d'une grandeur 'x' ;

D est la longueur du chemin optique parcourue par le faisceau de référence 123 ; et

L est la longueur de cohérence L de la source lumineuse 110. Lorsque le milieu diffusant 118 est l'air, compte tenu de l'indice optique de l'air, la profondeur de la tranche de mesure 119 est sensiblement égale à la moitié L/2 de la longueur L de cohérence de la source lumineuse 110. La lecture de l'hologramme formé dans le cristal photoréfractif 114 est faite au moyen du faisceau de référence 123 lui-même. En atteignant le cristal photoréfractif 114 sur sa face avant 134, le faisceau de référence 123 est en effet diffracté et engendre l'émission par le cristal, sur la face arrière 135 de celui-ci, d'un faisceau de référence diffracté 124.

En outre, le cristal photoréfractif 114 émet sur sa face arrière 135 un faisceau réfléchi transmis 128, qui est simplement la transmission du faisceau réfléchi 127 reçu sur sa face avant 134. Ce faisceau réfléchi transmis 128 se superpose avec le faisceau de référence diffracté 124.

Le cristal photoréfractif 114 est agencé et taillé de manière à recevoir le faisceau de référence 123 et le faisceau réfléchi 127 sur sa face avant 134, afin de pouvoir exploiter la propriété d'anisotropie de diffraction. Pour exploiter l'anisotropie de diffraction, le cristal photoréfractif est taillé selon les axes cristallographiques : 001, 110 et -110, et la face d'entrée 134 est orthogonale à l'axe -110. Les polarisations des faisceaux de référence 123 et rétroréfléchi 127 sont parallèles à l'axe cristallographique 001 au milieu du cristal, les cristaux photoréfractifs ayant un pouvoir rotatoire. L'épaisseur du cristal photoréfractif est d'environ 2 mm.

Sur la face arrière 135 du cristal photoréfractif 114, est donc émis le faisceau de référence diffracté 124 mêlé au faisceau réfléchi transmis 128. Ces deux faisceaux atteignent un polariseur 115 disposé entre le cristal photoréfractif 114 et le détecteur 116. Le cristal photoréfractif 114 est utilisé dans la configuration optique d'anisotropie de diffraction ; ainsi, le faisceau réfléchi transmis 128 est polarisé perpendiculairement au faisceau diffracté 124. Le polariseur élimine donc l'essentiel du faisceau réfléchi transmis 128, et ne transmet que le faisceau de référence diffracté 124. Cette élimination est en général extrêmement efficace puisque la partie restante du faisceau réfléchi transmis 128 peut être de l'ordre de 1/10 000$^{\text{ème}}$ de la valeur totale du faisceau réfléchi transmis 128 initial.

Dans le capteur 100, le détecteur 116 est une caméra CCD. Naturellement, d'autres modes de réalisation le détecteur 116 peut être plus simple, par exemple une photodiode apte à n'enregistrer qu'une information à la fois, un autre type de détecteur linéaire ou matriciel, par exemple une barrette ou une matrice CMOS, ou autre.

Dans le capteur 100, la longueur de cohérence L de la source lumineuse est faible par rapport à la distance entre le capteur et l'objet (distance D1, ou D2, ces deux valeurs étant à peu près égales), et vaut à peu près 1/8$^{\text{ème}}$ de cette distance.

Il s'ensuit que la tranche de mesure 119 a une profondeur (valant L/2) faible par rapport à la distance entre le capteur et l'objet, soit dans le cas présent à peu près 1/15$^{\text{ème}}$ de la distance entre le capteur et l'objet. Aussi, l'essentiel des signaux ou réflexions parasites générés par le milieu interposé entre le capteur et l'objet (et donc hors du volume de mesure) n'apportent absolument aucune contribution au signal diffracté 124.

Par conséquent, en prenant également en compte l'élimination du faisceau réfléchi transmis 128 du faisceau transmis à la caméra CCD 116, l'image formée par la caméra 116 est une image de l'objet qui ne prend pas en compte les réflexions parasites produites par des éléments de la scène étudiée situés plus près ou plus loin par rapport au capteur 100 que le volume de mesure 119 étudié.

Le grand intérêt du capteur est donc qu'il fournit une information relative à un volume de mesure de position bien connue, et cela malgré la présence d'un milieu diffusant 118 interposé entre le capteur et l'objet, milieu pouvant empêcher dans certain cas toute vision par l'oeil humain.

De plus, du fait que l'image obtenue par la caméra 116 ne comporte pas les informations réfléchies par le milieu diffusant 118 situé devant l'objet mesuré 120, l'image formée par la caméra 116 présente une excellente dynamique, et ainsi dans la plupart des cas une seule image peut être suffisante pour fournir des informations sur l'objet, sans qu'il soit nécessaire d'avoir recours à un traitement du signal complexe (moyenner l'acquisition sur un ensemble d'images, utiliser la technique du décalage de phase, etc.).

Cela étant, pour augmenter l'efficacité de l'appareil, il est possible d'augmenter la puissance du faisceau de référence. Ce perfectionnement permet d'augmenter la dynamique temporelle du système et ainsi d'en faire un dispositif quasi temps réel, pouvant fonctionner au rythme de 20 images par seconde. Grâce à la rapidité d'acquisition, le capteur peut ainsi être utilisé, à petite échelle, pour des acquisitions in vivo.

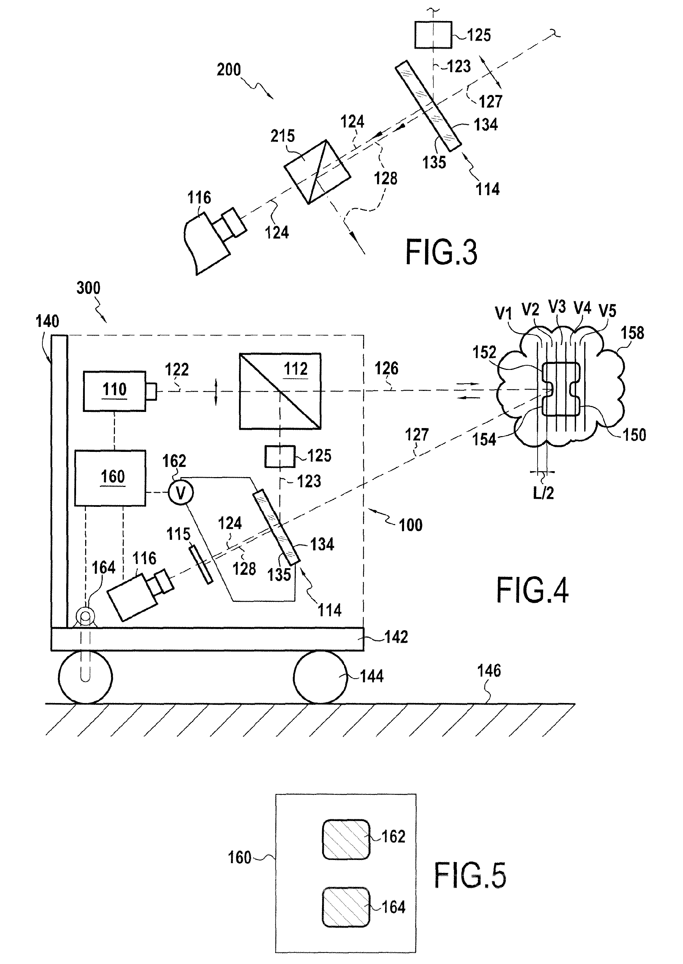

La figure 3 présente un autre mode de réalisation d'un capteur 200 selon l'invention. Sauf mention contraire, les éléments du capteur 200 sont identiques à ceux que comporte le capteur 100 présenté en relation avec la figure 2. La différence entre les capteurs 100 et 200 réside dans le filtre interposé entre le cristal et le détecteur, qui sert à éliminer du faisceau émis par le cristal en direction du détecteur 116, la plus grande partie du faisceau réfléchi transmis 128.

En effet, dans le capteur 200, ce filtre est un cube séparateur 215. Celui-ci élimine le faisceau réfléchi transmis 128 du faisceau émis par le cristal 114 en direction du détecteur 116, en renvoyant le faisceau réfléchi transmis 128 dans une direction autre que celle du détecteur 116. Dans le montage présenté, le faisceau réfléchi transmis 128 est renvoyé à angle droit. Ainsi, la caméra ou détecteur 116 ne reçoit du cristal que le faisceau diffracté 124. Le faisceau réfléchi transmis 128 renvoyé par le cube séparateur est analysé par un deuxième détecteur 217, qui permet de détecter et/ou caractériser le milieu diffusant. Ce deuxième détecteur 217 est également une caméra.

Enfin, le capteur selon l'invention peut être utilisé pour constituer un système d'imagerie 3D. La figure 4 présente un tel système d'imagerie 300. Ce système d'imagerie 300 est constitué essentiellement par un capteur 100 identique à celui décrit précédemment. Cependant, ce capteur 100 comporte en plus trois éléments non décrits précédemment :

- une unité de commande électronique 160 ;
- un dispositif 162 constitué principalement par une source de tension, permettant l'application d'une tension électrique entre deux faces parallèles, perpendiculaires à la face d'entrée 134 et à la face de sortie 135 du cristal 114 ;
- un système 140 pour faire varier la longueur relative du chemin optique parcouru par le faisceau de référence par rapport au chemin optique cumulé du faisceau incident 126 et du faisceau réfléchi 127.

Le système 140 est constitué par un chariot 142 équipé de roues 144, sur lequel est monté le capteur 100. Le chariot 142 est entraîné par un moteur 164 qui est fixé sur celui-ci.

L'unité de commande électronique 160 est un ordinateur individuel (PC). Cette unité de commande 160 commande la source lumineuse 110, le dispositif 162 servant à mettre sous tension les faces du cristal perpendiculaires aux faces avant 134 et arrière 135 du cristal 114, le moteur 164, et la caméra 116, et est reliée par fils à ces différents composants. Elle permet notamment de procéder à l'acquisition des différentes images produites par la caméra 116, aux différents emplacements de mesure choisis, via une carte d'acquisition non représentée.

L'acquisition d'un modèle 3D de l'objet se déroule de la manière suivante :

On fait rouler le chariot 142 sur le sol 146 en direction d'un objet à mesurer 150, situé dans un milieu ou une atmosphère diffusante 158. Ce mouvement est indexé au moyen d'un système d'indexation du mouvement non représenté, qui permet d'enregistrer les positions du capteur 100 aux différents emplacements de mesure.

Tout au long de ce mouvement, on procède à des acquisitions successives à l'aide du capteur 100. Chacune des acquisitions permet d'obtenir une image de l'objet, plus précisément une image de la section de l'objet se trouvant dans le volume de mesure du capteur 100. Cette image peut comporter également des réflexions produites par des particules du milieu diffusant 158 se trouvant dans le volume de mesure.

Le déplacement du capteur 100 entraine le déplacement du volume de mesure. Une méthode de mesure, par la figure 4, consiste à faire avancer le système d'imagerie 300 entre deux acquisitions d'une distance égale à la profondeur du volume de mesure du capteur 100, à savoir L/2, L étant la longueur de cohérence de la source lumineuse 110.

La production d'un modèle 3D de la scène mesurée est alors rendue possible par l'enregistrement successif des images fournies par le capteur 100 pour chacun des volumes de mesure successivement mesurés, V1 à V5. Naturellement, l'obtention du modèle 3D nécessite de déterminer les coordonnées des pixels de l'image acquise dans le plan perpendiculaire à la direction de mesure (à la direction de propagation du faisceau incident). La valeur de la coordonnée de profondeur, dans la direction de mesure, est obtenue à partir de la position du capteur 100 enregistrée au moment de l'acquisition.

La figure 5 présente ainsi l'image que permet d'acquérir le capteur 100 lors de la première acquisition, dans laquelle le volume de mesure V1 est positionné au niveau (dans la direction de mesure) de la face avant de l'objet mesuré 150.

Comme la face avant de l'objet 150 présente deux protubérances 152 et 154, l'image 160 comporte deux zones 162 et 164 dans laquelle une présence d'objet est détectée, correspondant respectivement à ces deux protubérances 152 et 154.

L'obtention de modèles numériques 3D est une application à forte valeur ajoutée d'un capteur ou d'un système d'imagerie selon l'invention. On notera qu'un mode de réalisation intéressant est celui dans lequel la direction de mesure ou direction de projection du faisceau incident est oblique par rapport à la direction de déplacement du véhicule sur lequel le capteur est embarqué, et forme un angle aigu, par exemple de 45°, par rapport à cette direction. Dans ce cas, le déplacement du véhicule permet de produire le modèle 3D du volume situé à proximité du véhicule, le long de l'itinéraire emprunté.

Dans une autre application, un capteur selon l'invention est embarqué à bord d'un engin mobile comme un véhicule automobile, un bateau, etc., et permet la détection et la détermination de la forme d'objets fixes ou mobiles évoluant à proximité de l'engin. Le capteur fournit ainsi des informations de sécurité essentielles lors des déplacements de l'engin.

Le capteur selon l'invention peut enfin être utilisé pour réaliser un distancemètre de précision. On choisira dans ce cas pour le capteur une source lumineuse de faible longueur de cohérence, et un faisceau de référence de forte intensité. Le capteur sera utilisé en particulier pour la mesure de la position de cibles, les cibles étant choisies fortement réfléchissantes.

**Revendications**

1. Capteur (100, 200) pour la détection à distance d'un objet, comportant

   - une source de lumière (110), apte à émettre un faisceau lumineux source (122);
   - un séparateur de faisceau (112), apte à recevoir le faisceau lumineux source et le diviser en un faisceau incident (126) et un faisceau de référence (123), transmis respectivement dans deux directions distinctes ;
   - un cristal photoréfractif (114) apte à enregistrer un hologramme à la réception du faisceau de référence (123) et d'un faisceau réfléchi (127) par un objet (120) illuminé par le faisceau incident (126), les deux faisceaux formant des interférences, et restituer l'hologramme dans un faisceau diffracté (124), émis lorsque le cristal est illuminé par le faisceau de référence (123);

   le cristal (114) étant taillé et disposé dans le capteur de manière à permettre la diffraction anisotrope du faisceau de référence (123), entrainant l'émission du faisceau diffracté (124) avec une polarisation perpendiculaire à celle du faisceau réfléchi transmis (128) par le cristal,

   - un détecteur (116), apte à enregistrer une information à réception du faisceau diffracté (124) ;
   - un filtre par polarisation (115,215), interposé entre le cristal (114) et le détecteur (116), apte à éliminer du faisceau émis par le cristal en direction du détecteur, la plus grande partie du faisceau réfléchi transmis (128), transmis par le cristal à réception du faisceau réfléchi, de telle sorte que le détecteur (116) ne reçoit principalement du cristal que le faisceau diffracté (124) ;

   le capteur **se caractérisant en ce que** la source lumineuse a une longueur de cohérence faible par rapport à la distance entre le capteur et l'objet.

2. Capteur selon la revendication 1, dans lequel la source lumineuse (110) et le détecteur (116) sont aptes à fonctionner sensiblement continûment, de telle sorte que lorsque le capteur est en fonctionnement, la formation et la lecture de l'hologramme ont lieu simultanément et continûment.

3. Capteur selon la revendication 1 ou 2, dans lequel le filtre comporte un polariseur (115), apte, dans le faisceau émis par le cristal en direction du détecteur, à éliminer la plus grande partie du faisceau réfléchi transmis (128).

4. Capteur selon la revendication 1 ou 2, dans lequel le filtre comporte un cube séparateur de polarisation, apte, dans le faisceau émis par le cristal en direction du détecteur, à séparer du faisceau diffracté, la plus grande partie du faisceau réfléchi transmis (128), et à diriger celle-ci dans une direction autre que celle du détecteur (116).

5. Capteur selon la revendication 4, comportant en outre un deuxième détecteur (217), pour la détection et/ou la caractérisation du milieu diffusant, apte à recevoir le signal renvoyé par le cube séparateur dans ladite direction autre que celle du détecteur.

6. Capteur selon l'une quelconque des revendications 1 à 5, dans lequel le faisceau réfléchi (127) est reçu par le cristal (114) en provenance directe de l'objet (120,150) via une optique de focalisation, suivant une direction formant un angle ($\alpha$) par rapport à la direction du faisceau incident.

7. Capteur selon l'une quelconque des revendications 1 à 6, dans lequel le cristal (114) est un cristal de la famille des sillénites, de type BiSiO, BiGeO, BiTiO, formules dans lesquelles Bi représente le bismuth, Ge le germanium, Si le silicium, Ti le titane, O l'oxygène.

8. Capteur selon revendications 1 à 7, dans lequel la source lumineuse (110) est cohérente, et est par exemple un laser.

9. Capteur selon l'une quelconque des revendications 1 à 7, dont la source lumineuse (110) est une LED ou une lampe halogène.

10. Capteur selon l'une quelconque des revendications 1 à 9, comprenant en outre un dispositif (162) permettant l'application d'une tension électrique entre deux faces parallèles du cristal (114), perpendiculaires aux faces d'entrée (134) et de sortie (135) de celui-ci, de manière à augmenter l'efficacité de diffraction de celui-ci.

11. Capteur selon l'une quelconque des revendications 1 à 10, dans lequel le détecteur (116) comporte un support permettant de fixer ou enregistrer une image, et le capteur est ainsi un imageur.

12. Système d'imagerie, comprenant un capteur selon la revendication 11 qui comporte un système (140) pour faire varier la longueur (D) relative du chemin optique parcouru par le faisceau de référence par rapport à celle (D1+D2) du chemin optique cumulé du faisceau incident (126) et du faisceau réfléchi (127), de manière à constituer un système d'imagerie 3D (300).

13. Système d'imagerie (300) selon la revendication 12, dans lequel le système (140) pour faire varier la longueur relative du chemin optique est un système pour provoquer un déplacement relatif du capteur par rapport à l'objet mesuré.

**14.** Système d'imagerie selon la revendication 12, dans lequel le système pour faire varier la longueur relative du chemin optique est un système faisant varier la longueur du chemin optique parcouru par le faisceau de référence.

**15.** Utilisation pour la mesure à travers des tissus biologiques d'un capteur selon l'une quelconque des revendications 1 à 11 ou d'un système d'imagerie selon l'une quelconque des revendications 12 à 14.

**16.** Utilisation pour la mesure à travers une atmosphère chargée en particules, par exemple des particules d'aérosol comme un brouillard, ou encore des gouttes de pluie, d'un capteur selon l'une quelconque des revendications 1 à 11 ou d'un système d'imagerie selon l'une quelconque des revendications 12 à 14.

FIG.1

ART ANTERIEUR

FIG.2

FIG.3

FIG.4

FIG.5

Europäisches
Patentamt

European
Patent Office

Office européen
des brevets

# RAPPORT DE RECHERCHE EUROPEENNE

Numéro de la demande

EP 09 17 9610

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | KAMSHILIN A A ET AL: "ADAPTIVE HOLOGRAPHIC INTERFEROMETERS OPERATING THROUGH SELF-DIFFRACTION OF RECORDING BEAMS IN PHOTOREFRACTIVE CRYSTALS" OPTICAL ENGINEERING, SOC. OF PHOTO-OPTICAL INSTRUMENTATION ENGINEERS, BELLINGHAM, vol. 28, no. 6, 1 juin 1989 (1989-06-01), pages 580-585, XP000026299 ISSN: 0091-3286 * alinéas [0002], [0003]; figure 2 * | 1-3,7-8, 10-12, 14-15 | INV. G03H1/00 G01N21/47 |
| Y | WO 96/36908 A (IMPERIAL COLLEGE [GB]; FRENCH PAUL MICHAEL WILLIAM [GB]) 21 novembre 1996 (1996-11-21) * le document en entier * | 1-8, 10-16 | |
| Y | STEPANOV S I: "APPLICATIONS OF PHOTOREFRACTIVE CRSTALS" REPORTS ON PROGRESS IN PHYSICS, INSTITUTE OF PHYSICS PUBLISHING, BRISTOL, GB, vol. 57, 1 janvier 1994 (1994-01-01), pages 39-116, XP001088536 ISSN: 0034-4885 * alinéas [03.2], [3.2.3]; figure 3.2 * | 1-9, 11-16 | DOMAINES TECHNIQUES RECHERCHES (IPC) G03H G01N |
| Y | KAMSHILIN A A ET AL: "Continuous reconstruction of holographic interferograms through anisotropic diffraction in photorefractive crystals" OPTICS COMMUNICATIONS, NORTH-HOLLAND PUBLISHING CO. AMSTERDAM, NL, vol. 53, no. 1, 1 février 1985 (1985-02-01), pages 23-26, XP024467013 ISSN: 0030-4018 [extrait le 1985-02-01] * le document en entier * | 1-9, 11-16 | |

-/--

Le présent rapport a été établi pour toutes les revendications

| Lieu de la recherche | Date d'achèvement de la recherche | Examinateur |
|---|---|---|
| Munich | 19 février 2010 | Noirard, Pierre |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

**Europäisches Patentamt**
**European Patent Office**
**Office européen des brevets**

## RAPPORT DE RECHERCHE EUROPEENNE

**Numéro de la demande**

EP 09 17 9610

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (IPC) |
| Y | HERRIAU J P ET AL: "Some polarisation properties of volume holograms in Bi12SiO20 crystals and applications" APPLIED OPTICS, OSA, OPTICAL SOCIETY OF AMERICA, WASHINGTON, DC, vol. 17, no. 12, 15 juin 1978 (1978-06-15) , pages 1851-1852, XP007909575 ISSN: 0003-6935 * page 1851, colonne de gauche; figure 1 * ----- | 10 | |
| A | YU P ET AL: "Holographic optical coherence imaging of tumor spheroids" APPLIED PHYSICS LETTERS, AIP, AMERICAN INSTITUTE OF PHYSICS, MELVILLE, NY, US, vol. 83, no. 3, 21 juillet 2003 (2003-07-21), pages 575-577, XP012035551 ISSN: 0003-6951 * page 575; figure 1 * ----- | 1 | |
| Y | TZIRAKI M ET AL: "Short-coherence photorefractive holography in multiple-quantum-well devices using light-emitting diodes" APPLIED PHYSICS LETTERS, AIP, AMERICAN INSTITUTE OF PHYSICS, MELVILLE, NY, US, vol. 75, no. 10, 6 septembre 1999 (1999-09-06), pages 1363-1365, XP012023433 ISSN: 0003-6951 * le document en entier * ----- -/-- | 1-3,6-9, 11-12, 14-15 | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| Munich | 19 février 2010 | Noirard, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 09 17 9610

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | LEITH E: "IMAGING THROUGH SCATTERING MEDIA WITH HOLOGRAPHY" JOURNAL OF THE OPTICAL SOCIETY OF AMERICA A, OPTICAL SOCIETY OF AMERICA, US, vol. 9, no. 7, 1 juillet 1992 (1992-07-01) , pages 1148-1153, XP000278656 ISSN: 1084-7529 * page 1148 * | 15-16 | |
| | ----- | | |
| Y | KWAN JEONG ET AL: "Fourier-domain holographic optical coherence imaging of tumor spheroids and mouse eye" APPLIED OPTICS OPT. SOC. AMERICA USA, vol. 44, no. 10, 1 avril 2001 (2001-04-01) , pages 1798-1805, XP7911795 ISSN: 0003-6935 * figure 2 * | 5 | |
| | ----- | | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 19 février 2010 | Noirard, Pierre |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

..........................................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 17 9610

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-02-2010

| Document brevet cité au rapport de recherche | Date de publication | Membre(s) de la famille de brevet(s) | Date de publication |
|---|---|---|---|
| WO 9636908 A | 21-11-1996 | AUCUN | |

Pour tout renseignement concernant cette annexe : voir Journal Officiel de l'Office européen des brevets, No.12/82